(19) Europäisches Patentamt
European Patent Office
Office européen des brevets

(11) **EP 3 121 620 B1**

(12) **EUROPÄISCHE PATENTSCHRIFT**

(45) Veröffentlichungstag und Bekanntmachung des Hinweises auf die Patenterteilung:
**20.12.2017  Patentblatt 2017/51**

(51) Int Cl.:
*G01S 17/93* (2006.01)      *G01S 7/487* (2006.01)
*B64C 27/04* (2006.01)      *B64D 45/08* (2006.01)
*G01S 17/89* (2006.01)      *G01N 21/53* (2006.01)
*G06T 7/10* (2017.01)

(21) Anmeldenummer: **15002153.3**

(22) Anmeldetag: **21.07.2015**

(54) **VERFAHREN ZUR SEGMENTIERUNG DER DATEN EINES 3D-SENSORS, ERZEUGT IN GEGENWART VON AEROSOL-WOLKEN, ZUR ERHÖHUNG DES SITUATIONSBEWUSSTSEINS UND DER LAGEERKENNUNG VON HINDERNISSEN**

METHOD FOR SEGMENTING THE DATA OF A 3D SENSOR, PRODUCED IN THE PRESENCE OF AEROSOL CLOUDS, FOR INCREASING SITUATIONAL AWARENESS AND THE DETECTION OF THE POSITION OF OBSTACLES

PROCEDE DE SEGMENTATION DE DONNEES D'UN CAPTEUR 3D, FABRIQUE EN PRESENCE DE NUAGES D'ALCOOL, DESTINE A L'AUGMENTATION DE LA RECONNAISSANCE DE SITUATIONS ET LA RECONNAISSANCE DE POSITIONS D'OBSTACLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.01.2017  Patentblatt 2017/04**

(73) Patentinhaber: **HENSOLDT Sensors GmbH**
**82024 Taufkirchen (DE)**

(72) Erfinder:
• **Wegner, Matthias**
 **88048 Friedrichshafen (DE)**
• **Münsterer, Thomas**
 **88069 Tettnang (DE)**

(74) Vertreter: **LifeTech IP**
**Spies & Behrndt Patentanwälte PartG mbB**
**Elsenheimerstraße 47a**
**80687 München (DE)**

(56) Entgegenhaltungen:
**EP-A1- 1 650 534      EP-A1- 2 418 510**
**EP-A1- 2 634 597      EP-A1- 2 884 305**

• **DIETMAYER K C J ET AL: "MODEL BASED OBJECT CLASSIFICATION AND OBJECT TRACKING IN TRAFFIC SCENES FROM RANGE IMAGES", PROCEEDINGS OF THE INTELLIGENT VEHICLES SYMPOSIUM, XX, XX, 1. Januar 2001 (2001-01-01), Seiten 25-30, XP009023302,**

**Beschreibung**

Die Erfindung betrifft ein Verfahren zur Segmentierung der Daten eines 3D-Sensors, erzeugt in Gegenwart von Aerosol-Wolken, zur Erhöhung des Situationsbewusstseins und der Lageerkennung von Hindernissen, um einen Verlust der räumlichen Orientierung im Falle einer Sichtbehinderung durch die Aerosol-Wolke zu verhindern.

In ariden, wüstenartigen Gebieten, wie z.B. Afghanistan, Irak oder Syrien, kommt es bei Außenlandungen von Drehflüglern wie z.B. Hubschraubern häufig zu einer starken Aufwirbelung von Sand- und Staubpartikeln, somit einer Form einer Aerosol-Wolke. Dieser Effekt wird durch den sogenannten Downwash des Hauptrotors oder der Rotoren des Luftfahrzeugs verursacht. Die chaotischen Sand- und Staubaufwirbelungen führen dazu, dass der Pilot die Cockpit-Außensicht ganz oder teilweise verliert - dem sogenannten Brownout. Auch andere Formen von Aerosolwolken wie Whiteouts (Schneeaufwirbelungen während der Landung), Rauch oder Nebel behindern die Sicht und können das Situationsbewusstsein des Piloten in gefährlicher Weise erheblich einschränken. Durch die fehlende oder eingeschränkte Cockpit-Außensicht besteht die Gefahr des Verlustes der räumlichen Orientierung über Grund, insbesondere hinsichtlich Nick- und Rollwinkel sowie ungewollter seitlicher Drifts des landenden Luftfahrzeugs. Darüber hinaus wird die Lageerkennung von Hindernissen in der Landezone stark eingeschränkt. All dies führt immer wieder zu Flugunfällen.

Um dem Piloten eine synthetische räumliche Sicht und Orientierungshilfe zur Aufrechterhaltung des Situationsbewusstseins und der Lage von Hindernissen zu ermöglichen, werden Sensordaten der Landezone benötigt. Hierfür kommen unterschiedliche Systeme (z.B. Radar-, Laser-, Kamerasysteme, GPS etc.) zum Einsatz.

Die Verwendung eines Radarsensors ist in der DE 102009035191 A1 beschrieben. Dabei wird auf einer synthetischen Umgebungsanzeige aufgesetzt, die im Falle eines Brownouts mit zusätzlichen Daten eines dazu aktivierten Radar-Sensors versorgt wird.

Bei Radar-Systemen können jedoch erhebliche Probleme durch sogenanntes Übersprechen bei der Vermessung der nur wenige Meter entfernten Landefläche bei sich gleichzeitig stark ändernden Nickwinkeln während des finalen Landevorgangs sowie durch Echos von Nebenkeulen auftreten.

Laser-Sensoren haben aufgrund ihrer kurzen Wellenlänge von z.B. 1.5 $\mu$m im Verhältnis zu Radar-Systemen eine sehr viel höhere räumliche Auflösung und sind deshalb deutlich besser geeignet, wichtige Details des Situationsumfeldes sowie gefährliche Hindernisse (wie z.B. Hochspannungsleitungen) in der Landezone eines Hubschraubers zu erfassen. Jedoch können Laser-Sensoren als optische Systeme im Gegensatz zu Radar-Systemen eine Brownout-Wolke oft nicht vollständig durchdringen, da die Laser-Pulse bereits von Teilen der aufgewirbelten Staubwolke zum Sensor zurückreflektiert, gestreut oder absorbiert werden. In den aufgenommenen Laser-Messdaten verdecken im allgemeinen Teile der Brownout-Wolke die freie Sicht auf die dahinterliegende Landefläche und eventuell vorkommende Hindernisse.

Diese physikalische Eigenschaft von Laser-Sensoren lässt sie vordergründig als weniger geeignet für die Pilotenunterstützung bei Brownout-Landungen erscheinen. US 2011/0313722 A1 beschreibt ein Verfahren basierend auf Laser-Sensor Daten bei dem eine Korrelation der abfallenden Flanke "falling edge" eines Laser-Echos mit einem Schwellwert stattfindet, wobei eine messtechnische Unterscheidung zwischen Hindernissen und Aerosol-Wolke erfolgt.

EP 2 418 510 A1 beschreibt ein Verfahren zur Beurteilung der Bodenfläche auf deren Eignung als Landeplatz für Luftfahrzeuge, wobei die Daten eines 3D-Sensors über mehrere Mess-Zyklen gemittelt werden und aus der so erhaltenen Messwertdichte auf Hindernisse geschlossen wird; hierbei wird ein Schattenwurf berücksichtigt.

In bekannten numerischen Berechnungsverfahren, mit deren Hilfe man aufgewirbelten Staub einer Brownout-Wolke segmentieren kann, wird eine globale Akkumulation von allen Sensor-Messdaten aus einer Vielzahl an vollständigen (Laser-) Sensor Aufnahme-Zyklen (sogenannte Sensor-Frames) durchgeführt. Dabei werden sehr große Datenmengen akkumuliert. Nach der Akkumulation wird versucht, statistische Eigenschaften der Messpunkte zu bestimmen, die es ermöglichen sollen, Staubmesspunkte von realen, statischen Messpunkten zu unterscheiden.

Der Nachteil dieser Art von Verfahren ist, dass, mittels der Akkumulation aller Messpunkte mehrerer Sensor-Frames von einer sehr umfangreichen, globalen Datenbasis ausgehend, versucht wird, auf lokale Eigenschaften einzelner, isolierter Staubmesspunkte zu schließen.

Es ist Aufgabe der vorliegenden Erfindung, ein Verfahren zur effizienteren und präziseren Erkennung von Messpunkten einer Aerosol-Wolke in Echtzeit basierend auf Laser-Sensor-Daten zur (deutlichen) Erhöhung des Situationsbewusstseins und der Lageerkennung von realen Hindernissen zu bestimmen.

Diese Aufgabe wird mit dem Verfahren gemäß Patentanspruch 1 gelöst. Vorteilhafte Ausführungen der Erfindung sind Gegenstand von Unteransprüchen.

Das erfindungsgemäße Verfahren zur Segmentierung der Daten eines 3D-Sensors, erzeugt in Gegenwart von Aerosolwolken, um eine Erhöhung des Situationsbewusstseins und der Lageerkennung von Hindernissen zu erreichen, beinhaltet die folgenden Verfahrensschritte / Verarbeitungsschritte:

1. Transformation der Sensordaten in eine 3D-Messpunktwolke,
2. Ermittlung von zusammenhängenden Untermengen der 3D-Messpunktwolke, sogenannte Messpunkt-Cluster, basierend auf der lokalen Messpunktdichte. Dieser Schritt erfolgt auf Basis der Sensordaten eines einzelnen Messzyklus des 3D-Sensors,

3. Bestimmung mindestens einer der folgenden charakteristischen Kenngrößen der einzelnen Messpunkt-Cluster:

- Position,
- Orientierung im Raum,
- Form,

4. Ermittlung der zeitlichen Veränderung dieser charakteristischen Kenngrößen anhand der in nachfolgenden Messzyklen aufgenommenen Sensordaten, aus der sich die Zugehörigkeit eines Messpunkt-Clusters zu einem realen Hindernis oder zu der Aerosolwolke ergibt.

Das vorliegende Verfahren zur Segmentierung von Sensordaten zur Erhöhung des Situationsbewusstseins, insbesonders eines Fahrzeugführers, und der Lageerkennung von Hindernissen innerhalb einer Aerosol-Wolke (z.B. einer Brownout-Wolke) wird bevorzugt in Verbindung mit dem Einsatz eines Laser-Sensor System ausgeführt, wobei ein solches System beispielsweise folgende Komponenten umfassen kann: einen 3D-Laser-Sensor zur Hindernisdetektion, eine elektronische Datenauswertung für die aufgenommenen Messzyklen (sogenannte Sensor-Frames) sowie eine Ausgabeeinrichtung (z.B. Anzeigedisplay), wobei das System bzw. Teile davon in andere Systeme integriert sein können oder mit anderen Systemen kollaborieren können, indem entsprechende Daten übertragen und ausgetauscht werden.

Mit dem erfindungsgemäßen Verfahren wird die zuverlässige Erkennung von realen Hindernissen innerhalb der gescannten Aerosol-Wolke / -Aufwirbelung ermöglicht.

Die Anwendung der Erfindung ist für alle genannten Situationen möglich, bei denen eine Sichtbehinderung / Einschränkung der Cockpit-Außensicht durch Staub, Rauch oder Nebel bzw. eine Aufwirbelung dieser Elemente, darunter fallen beispielsweise bekannte Phänomene wie Brownouts (Staub-/ Sandaufwirbelungen) oder Whiteouts (Schneeaufwirbelungen), vorliegt.

Dabei ist es unerheblich, ob die Brownout-Situation durch den Rotor-Downwash eines landenden Drehflüglers bzw. Flugzeugs mit Senkrechtstart-/Landefähigkeit erzeugt wird oder durch Naturphänomene (d.h. Brownout ähnliche Verhältnisse), wie z.B. Wind oder sonstige Wettereinflüsse oder auch durch die Bewegung anderer (Luft-)Fahrzeuge verursacht wird.

Im Folgenden wird die Erfindung an Hand einer Brownout-Situation stellvertretend für alle Formen von Aerosol-Wolken erläutert.

Das erfindungsgemäße Verfahren basiert auf der numerischen Analyse von hochauflösenden 3D-Daten. Diese 3D-Daten werden vorteilhaft in Echtzeit von einem typischerweise am Hubschrauber montierten Laser-Sensor (wie z.B. SferiSense® der Airbus Defence and Space GmbH, Ottobrunn, Deutschland) vor und während der Brownout-Landung aufgenommen, wobei sich der Einsatz nicht auf die Anwendung in fliegenden oder fahrenden Fahrzeugen beschränkt, sondern auch in stationären Anlagen möglich ist.

Durch das vorliegende Berechnungsverfahren ist es möglich, aus den 3D-Messdaten eines Laser-Sensors den aufgewirbelten Staub bzw. Sand der Brownout-Wolke zuverlässig zu erkennen und damit von realen Hindernissen zu segmentieren, wobei die Segmentierung mit Hilfe der Clusterbildung und über charakteristische Kenngrößen der Cluster erfolgt. Die Unterscheidung der Zugehörigkeit eines Messpunktes zur Brownout-Wolke erfolgt durch die Analyse der zeitlichen Änderung dieser Cluster-Kenngrößen. Durch diese spezielle Verarbeitungsform bei der Staub-Segmentierung wird der Nachteil von Laser-Sensoren bei Brownout-Landungen negiert und man kann praktisch durch die Staubwolke hindurchschauen, was auf vorteilhafte Art zu einer deutlichen Erhöhung des Situationsbewusstseins insbesonders für einen Piloten und der Lageerkennung von Hindernissen führt.

Das erfindungsgemäß und in den Figuren detailliert erläuterte Berechnungsverfahren kehrt die Logik bekannter Verfahren, deren Grundlage eine globale Akkumulation von allen Sensor-Messdaten aus einer Vielzahl an vollständigen Aufnahme-Zyklen des Sensorgesichtsfelds FOV (Field-of-view) ist, um. Durch die Umkehrung der Verarbeitungslogik bisheriger Berechnungsverfahren und -Systeme von global → lokal hin zu lokal → global eines Staub-Clusters, ergibt sich ein signifikanter Effizienzgewinn bei der Verarbeitung der 3D-Daten.

Diese Vorgehensweise ermöglicht, sehr recheneffizient zu arbeiten und präzise, praktisch frame-genaue Berechnungsergebnisse zu erhalten, wohingegen die bekannten Verfahren zur mathematischen Auswertung die vollständige Akkumulation der 3D-Daten einer Vielzahl von Sensor-Frames benötigen. Insofern stellt die vorliegende Erfindung einen völlig neuartigen Ansatz zur Lösung des Problems der Aerosol / Staubwolken-Detektion und -Segmentierung durch Laser-Sensoren dar. Damit kann ein echtzeitfähiges, operationell einsatztaugliches Avionik-System zur Pilotenunterstützung geschaffen werden, das Hubschrauberlandungen speziell unter Brownout-/Whiteout-Bedingungen erleichtert und die Gefahr von Unfällen deutlich senkt.

Der Einsatz des erfindungsgemäßen Verfahrens beschränkt sich allerdings nicht auf Luftahrzeuge. Auch in anderen Fahrzeugen oder auch an stationären Positionen kann ein entsprechendes System vorteilhaft implementiert werden. Die Nutzung der mit dem Verfahren gewonnen Informationen kann durch einen Fahrzeugführer oder eine Maschine z.B. ein autonomes System erfolgen.

Die Erfindung wird unter anderem anhand konkreter numerischer Beispielberechnungen auf Basis realer Messdaten mit Bezug zu den Figuren 1 bis 15 beschrieben.

Es zeigen:

Fig. 1   den minimalen Scan-Bereich eines Laser-Sensor zur Anwendung des erfindungsgemäßen Verfahrens,

Fig. 2   die inhomogene Partikeldichte innerhalb einer Brownout-Staubwolke,

Fig. 3   die Intensität des rückreflektierten Lichts eines einzelnen Laser-Pulses aus einer Brownout-Staubwolke in Abhängigkeit der Eindringtiefe,

Fig. 4   die Wahrscheinlichkeitsverteilung eines Messwertes aus einer Brownout-Staubwolke,

Fig. 5   das Abbildungsverhalten eines Multi-Puls Laser-Sensors bei einer Brownout-Landung,

Fig. 6   das zeitliche Verhalten des geometrischen Schwerpunktes einer Brownout-Staubwolke und eines dahinter liegenden statischen Hindernisses in der Draufsicht,

Fig. 7   das Wahrscheinlichkeitsmaß $P_{I,i}$ in Abhängigkeit der Streuung einer Cluster-Kenngröße in Bezug auf deren mittlere quadratische Abweichung vom jeweiligen Mittelwert,

Fig. 8   ein exemplarisches Berechnungsergebnis für eine 3D-Anordnung mehrerer Staub-Cluster mit ihren Hauptachsen und jeweiligen Schwerpunkten bei Anwendung des erfindungsgemäßen Verfahrens,

Fig. 9   eine Momentaufnahme des typischen zeitlichen Verhaltens der Schwerpunkte und Hauptachsen-Orientierung von flüchtigen Staub-Clustern im 3D-Raum,

Fig.10   das zeitliche Verhalten der Schwerpunkte und Hauptachsen realer, statischer Hindernisse,

Fig.11   die Projektionsmenge T(Σ-Pi) einer segmentierten Staubwolke aus einer realen Brownout-Landung bei Anwendung des erfindungsgemäßen Verfahrens,

Fig.12   eine perspektivische 3D-Ansicht der segmentierten Brownout-Staubwolke aus Fig. 11 bei Anwendung des erfindungsgemäßen Verfahrens,

Fig.13   eine weitere 3D-Ansicht der segmentierten Brownout-Staubwolke aus Fig. 11 bei Anwendung des erfindungsgemäßen Verfahrens,

Fig.14   eine segmentierte Brownout-Wolke in perspektivischer 3D-Ansicht und das Foto der zugehörigen Szene mit realen Hindernissen hinter der Brownout-Wolke bei Anwendung des erfindungsgemäßen Verfahrens,

Fig.15   die rückwärtige 3D-Ansicht der Szene aus Fig. 14.

Das im Folgenden erläuterte Ausführungsbeispiel geht konkret auf den Fall einer Hubschrauberlandung bei auftretendem Brownout ein. Sinngemäß gilt die nachfolgende Erläuterung für alle genannten Aerosol-Wolken sowie Anwendungsfälle (mobil, stationärer Einsatz).

Die vorliegende Erfindung ist durch ein Berechnungsverfahren gekennzeichnet, welches auf Basis hochauflösender 3D-Laser-Daten in der Lage ist, den aufgewirbelten Staub zu detektieren, segmentieren und aus der synthetischen Anzeige des Piloten (z.B. Helmvisier, HUD oder Monitor) zu entfernen. Mit Hilfe dieses Verfahrens wird es für den Anwender, insbesondere für einen Piloten, möglich, praktisch durch den Staub hindurchzuschauen und so einen räumlichen Orientierungsverlust im Brownout-Fall zu verhindern. Selbst die Erkennung von relativ kleinen Hindernissen, z.B. in der Landezone eines Hubschraubers, durch die Brownout-Wolke hindurch, ist realisierbar.

Um Sand- und Staubaufwirbelungen im Sinne der Erfindung algorithmisch detektieren zu können, sollte der verwendete Laser-Sensor bevorzugt ein hinreichend großes horizontales und vertikales Field-of-View (FOV) vor dem Hubschrauber in Richtung seines momentanen Flugpfades abtasten. Die geforderten 3D-Daten des Sensors liegen vorteilhaft in Echtzeit vor. Diese können beispielsweise mit einem typischerweise am Hubschrauber montierten Sferi-Sense® Laser-Sensor, gewonnen werden.

Hierzu ist es besonders vorteilhaft, wenn die 3D-Daten pro Aufnahme-Zyklus (einem sog. Frame) des Laser-Sensors mehrere Messdatenechos pro Laser-Puls (sog. Multi-Puls-Daten) umfassen.

Die Reichweite des verwendeten Laser-Sensors sollte bevorzugt mindestens 50 m betragen und die Entfernung bei der Erfassung des ersten Messpunktes vor dem Hubschrauber sollte bevorzugt nicht größer als 25 m sein, d.h. darf sich nicht weiter als 25m vor dem Hubschrauber befinden, um Berechnungen im Sinne der vorliegenden Erfindung in optimaler Weise durchführen zu können. Damit ergeben sich in einer bevorzugten Ausführung folgende Mindestanforderungen in Bezug auf das "forward-looking" Field-of-View (FOV) des verwendeten Laser-Sensors:

- minimales horizontales Field-of-View: $\varphi_{min}:=\pm15°$
- minimales vertikales Field-of-View: $\vartheta_{min}:=\pm15°$
- minimales Entfernungsmessintervall: $R_{min}:=[25m, 50m]$

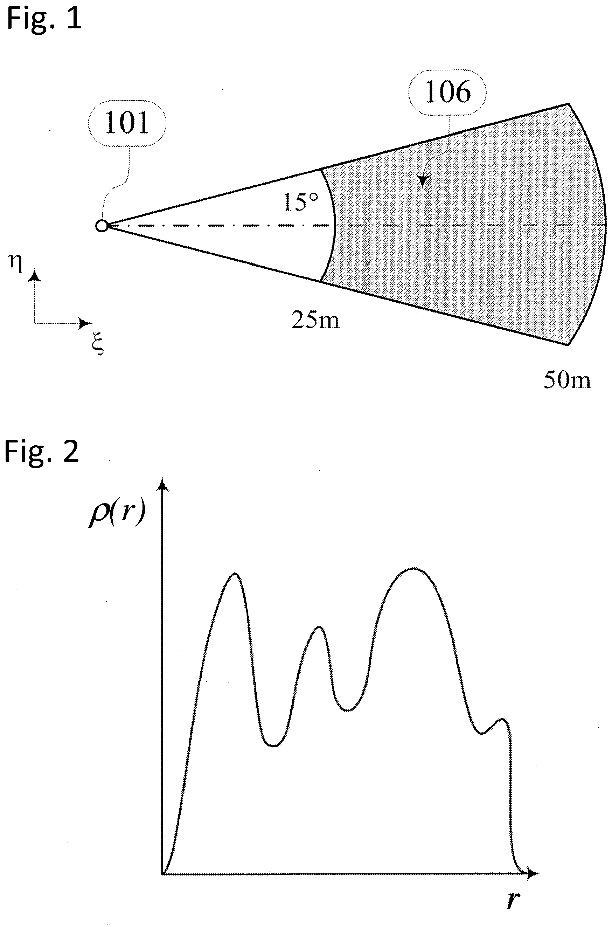

Fig. 1 zeigt den minimalen horizontalen Scan-Bereich eines für das Verfahren einsetzbaren Laser-Sensors. Die Bezugszeichen zeigen die Sensor-Position 101 über der Landefläche $\xi\eta \subset \mathbf{R}^2$, das Blickfeld von $\pm15°$, sowie schraffiert den Mindest-Detektionsbereich "horizontales FOV" 106 des Laser-Sensors, der innerhalb des kleinsten Entfernungs-Intervalls von [25m, 50m] liegt. Dieses Feld erstreckt sich bei Anwendung in einem Hubschrauber in Flugrichtung, bzw. in Fahrtrichtung oder in Blickrichtung bei anderen Einsatzbereichen.

Das erfindungsgemäße Verfahren macht sich die vermeintliche Schwäche von Laser-Sensoren vorteilhaft zunutze, indem es die natürliche Verdichtung der Sensor-Messwerte an der Vorderseite einer Brownout-Wolke analysiert. Dadurch wird ein scheinbarer Nachteil der physikalischen Detektionseigenschaften von Laser-Sensoren in einen algorithmischen Vorteil umgewandelt, der es ermöglicht, Brownout-Staubaufwirbelungen vor dem Hubschrauber zu detektieren und damit von realen Hindernissen und dem Erdboden dahinter zu segmentieren. Die Segmentierung des Staubs wiederum erlaubt es, mit Multi-Puls Laser-Sensoren praktisch durch die dichte Brownout-Wolke hindurchzuschauen - analog zu Radar-Systemen, ohne jedoch deren prinzipielle Nachteile - insbesondere im Hinblick auf die deutlich schlechtere räumliche Auflösung.

Hierzu werden zunächst - unter vorteilhafter Ausnutzung der physikalischen Abbildungseigenschaften einer Brownout-Wolke - auf Basis der 3D-Informationen eines einzigen Sensor-Frames gewisse Teilmengen bestimmt, die bereits Hinweise auf die potentielle Zugehörigkeit zur Brownout-Wolke enthalten.

Für die im weiteren vorgestellte mathematischen Verarbeitung werden charakteristische Eigenschaften der 3D-Messdaten während einer Brownout-Landung bestimmt. Hierzu werden die Messrohdaten des Laser-Sensors, typischerweise bestehend aus Azimut $\varphi$, Elevation $\vartheta$ und Messentfernung $r$, mittels einer geeigneten Transformation $f_P$ in eine Punktewolke im $\mathbf{R}^3$ überführt:

$$f_P : \mathbf{R}^3 \to \mathbf{R}^3 \quad (\varphi,\vartheta,r) \mapsto f_P(\varphi,\vartheta,r) := (\xi,\eta,\zeta)^t \tag{1}$$

Damit erhält man die Punktewolke P :

$$P := \{(\xi,\eta,\zeta)^t \in \mathbf{R}^3\} \tag{2}$$

Sei $m$ die Anzahl der Laser-Pulse pro Sensor-Frame und $n$ die Anzahl der Messwerte pro Laser-Puls, dann bezeichne $\sum P_i$ die Vereinigung der Punktewolken $P_k$ aller Messwerte des i-ten Frames des Laser-Sensors über alle Pulse:

$$\sum P_i := \bigcup_m \left(\cup P_k\right) \quad k \in \{1,\dots,n\}, i,m \in \mathbf{N} \tag{3}$$

Betrachtet man einen einzelnen Messwert der Punktewolke $\sum P_i$ als Ausprägung der Zufallsvariable $X$ mit einer von der Entfernung abhängigen

Eintrittswahrscheinlichkeit $p(r)$, dann entspricht die physikalische Laser-Vermessung eines ausgedehnten, nicht massiven räumlichen Objekts, wie es eine Brownout-Wolke darstellt, einem Bernoulli-Prozess oder dichotomen Versuchsschema. Somit liegt der Akkumulation der Messwerte in $\sum P_i$ eine Binomialverteilung zugrunde.

Für eine isolierte Brownout-Wolke ergeben sich, aufgrund der physikalischen Detektionseigenschaften von Laser-Sensoren sowie der Verteilung der aufgewirbelten Partikel innerhalb der Staubwolke, qualitativ folgende charakteristische Eigenschaften:

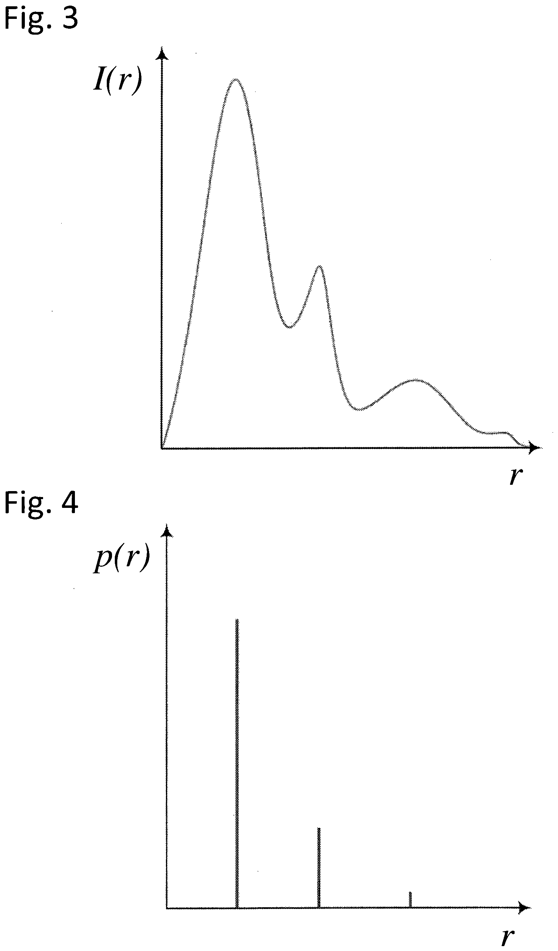

- Die Partikeldichte $\rho(r)$ innerhalb der Staubwolke ist über die gesamte, räumliche Tiefe der Wolke nicht homogen, sondern variiert mit der Entfernung $r$ (in Fig. 2 wird dies veranschaulicht):
- Je weiter ein Laser-Strahl in die Staubwolke eindringt, desto größer ist sein bereits gestreuter Anteil an Lichtenergie. Daraus folgt, dass die Intensität $I(r)$ des vom Staub rückreflektierten Lichts mit zunehmender Eindringtiefe $r$ merklich abnimmt, genauer gesagt mit einem Lambert-Beer'schen Absorptionsprofil gefaltet wird (in Fig. 3 wird dies veranschaulicht):
- Aufgrund der Intensitätsabnahme mit zunehmender Eindringtiefe nimmt auch die Eintrittswahrscheinlichkeit $p(r)$ für einen einzelnen Messwert der Punktewolke $\sum P_i$ mit zunehmender Eindringtiefe in die Brownout-Wolke merklich ab (in Fig. 4 wird dies veranschaulicht):

   Aus der qualitativen Wahrscheinlichkeitsverteilung der Staub-Messwerte in Fig.4 ergibt sich das folgende physikalische Abbildungsverhalten von Laser-Sensoren:

- An der dem Hubschrauber zugewandten Vorderseite der Brownout-Wolke kommt es zu einer Häufung von Messwerten aus der Punktewolke $\sum P_i$ - es entsteht hier eine natürliche Messwertverdichtung. Im Gegensatz dazu wird die dem Hubschrauber abgewandte Hinterseite der Brownout-Wolke aufgrund der Intensitätsabnahme des rückreflektierten Lichts (vgl. Fig. 3) durch einen Laser-Sensor praktisch nicht erfasst. Die Messung der Punktewolke $\sum P_i$ liefert demnach räumlich eine Art Hohlfigur der Staubwolke, von der nur die Vorderseite existiert.

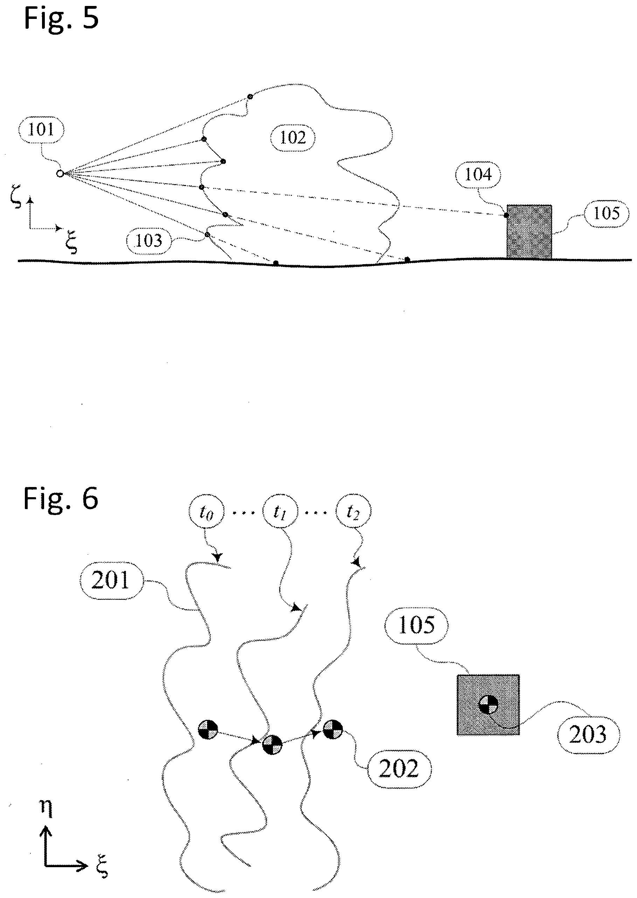

In Fig. 5 wird dieses Verhalten in der $\xi,\zeta$-Ebene prinzipiell veranschaulicht. Es zeigt das physikalische Abbildungsverhalten eines Multi-Puls Laser-Sensors bei einer Brownout-Landung.

Ausgehend von der Sensorposition 101 in Flugrichtung kommt es zu einer Messwertverdichtung an der Staubwolkenvorderseite 103, jedoch zeigen praktische Messungen bei Brownout-Landungen mit Laser-Sensoren wie z.B. SferiSense®, dass insbesondere der letzte Messwert 104 eines Laser-Pulses die Brownout-Wolke 102 häufig vollständig durchdringt und damit reale Hindernisse 105 bzw. der Erdboden hinter der Staubwolke teilweise erkannt werden können.

Das erfindungsgemäße Verfahren macht sich die im vorangegangenen Abschnitt erläuterten, allgemeinen, physikalischen Abbildungseigenschaften von Laser-Sensoren vorteilhaft zunutze - insbesondere die typische Verdichtung der Messwerte aus $\sum P_i$ an der dem Sensor zugewandten Seite einer Brownout-Wolke. Der vordergründige Nachteil von Laser-Sensoren bezüglich der beschriebenen Messwertverdichtung aufgrund physikalischer Abbildungseigenschaften wird im Folgenden durch das erfindungsgemäße Verfahren als ein Detektionsvorteil im mathematisch-algorithmischen Sinne genutzt, indem zusammenhängende Untermengen von $\sum P_i$ (sog. Cluster) bestimmt werden. Der Cluster-Zusammenhang ist über die lokale Punktdichte in $\sum P_i$ auf natürliche Art und Weise gegeben. Aufgrund der physikalisch bedingten ausgeprägten, vertikalen Struktur und gehäuften Anordnung der Messwerte aus $\sum P_i$ an der Vorderseite der Brownout-Wolke verstärkt sich die lokale Punktdichte nochmals, wenn man $\sum P_i$ in eine zur Landefläche parallele $\xi\eta$-Ebene projiziert:

$$T : \mathbf{R}^3 \to \mathbf{R}^2 \quad (\xi,\eta,\zeta)^t \mapsto T(\xi,\eta,\zeta) := (\xi,\eta)^t \quad , mit \ (\xi,\eta,\zeta)^t \in \sum P_i \qquad (4)$$

Die Menge der projizierten Messwerte aus $\sum P_i$ sei definiert als:

$$T(\Sigma P_i) := U \subset \mathbf{R}^2 \qquad (5)$$

Ein lokales Punktdichtemaß in $U$ kann z.B. mit Hilfe der Tschebyscheff-Metrik leicht ermittelt werden (wobei auch andere Metriken, wie z.B. die Euklidische Metrik Anwendung finden können).

$$\forall a,b \in U : d(a,b) := \max\{|\xi_a - \xi_b|, |\eta_a - \eta_b|\} \qquad (6)$$

Dabei sind $a$, $b$ jeweils Punkte aus der Menge $U$ und $d(a,b)$ definiert den Abstand zwischen den Punkten $a$ und $b$.

Die Grundidee der Clusterbildung auf Basis der lokalen Punktdichte in $U$ besteht darin, dass in einer wohldefinierten, minimalen Umgebung $B_{d_{\min}}$ mit:

$$B_{d_{\min}}(a) := \{b \in U \mid d(a,b) \le d_{\min}\} \quad , a \in U , d_{\min} = const. \qquad (7)$$

(wobei $B_{d_{\min}}(a)$ eine Umgebung um den Punkt $a$ bezeichnet, bei der der Abstand zu einem gegebenen Nachbarpunkt *b* unter dem festgelegten Schwellwert $d_{min}$ liegt) eine minimale Anszahl $n_{min}$ von Nachbarpunkten entahlten sein muss. Ergo muss die Punktedichte in $B_{d\text{min}}$ größer sein als eine gegebene Untergrenze:

$$| B_{d_{\min}} (a \in U ) | \ge n_{\min} , n_{\min} = const. \tag{8}$$

Wie man leicht zeigen kann, ist Kriterium (8) für eine Clusterbildung in *U* notwendig jedoch nicht hinreichend, da man i.a. zwischen Kernpunkten im Innern eines Clusters und Punkten am bzw. auf dem Rand des Clusters bei der Bildung von Zusammenhangskomponenten differenzieren muss. Es ist unmittelbar einsichtig, dass i.d.R. die lokale Punktdichte in der Umgebung $B_{d\text{min}}$ eines Randpunktes kleiner ist als die entsprechende Punktdichte eines Kernpunktes. Die nachfolgend gegebene rekursive Definition eines dichteabhängigen Clusters *C* über *U* berücksichtigt in üblicher Weise die Ungleichheit der lokalen Punktdichte zwischen Kern- und Randpunkten und bildet gleichzeitig die Basis für die hier verwendete Art der Bildung von Zusammenhangskomponenten:

### Def.: dichteabhängiges Cluster (9)

$$C \subseteq U \text{ heißt dichteabhängiges Cluster} \overset{def}{\Leftrightarrow}$$

$$(1) \quad \forall a,b \in U : a \in C \wedge a \overset{p}{\longrightarrow} b \quad \Rightarrow \quad b \in C$$

$$(2) \quad \forall a,b \in C : a \overset{c}{\longleftrightarrow} b$$

Die aus der Graphentheorie entlehnte intuitive Schreibweise aus Definition (9) ist folgendermaßen zu verstehen:

### Def.: Zusammenhang zweier Punkte eines dichteabhängigen

### Cluster $C \subseteq U$ (10)

$$a \in C \text{ heißt zusammenhängend mit } b \in C \text{ (in Zeichen } a \overset{c}{\longleftrightarrow} b ) \overset{def}{\Leftrightarrow}$$

$$\exists c \in C : c \overset{p}{\longrightarrow} a \wedge c \overset{p}{\longrightarrow} b$$

Definition (10) beschreibt den Zusammenhang zwischen zwei Clusterpunkten *a*, *b* ∈ *C* über die Existenz eins dritten benachbarten Clusterpunktes *c* ∈ *C*.

### Def.: indirekte Benachbartheit zweier Punkte in $C \subseteq U$ (11)

$$a \in C \text{ heißt indirekt benachbart zu } b \in C \text{ (in Zeichen } b \overset{p}{\longrightarrow} a ) \overset{def}{\Leftrightarrow}$$

$$\exists p_1,\ldots,p_n \in C \text{ mit } p_1 = b \wedge p_n = a : p_i \longrightarrow p_{i+1} \quad , i \in \{1,\ldots,n\} , n \in \mathbf{N}$$

Definition (11) beschreibt zwei Clusterpunkte *a*, *b* ∈ *C* als indirekt benachbart, wenn sie über einen Pfad bestehend aus endlich vielen direkten Nachbarn miteinander verbunden sind.

### Def.: direkte Benachbartheit zweier Punkte in $C \subseteq U$ (12)

$$a \in C \text{ heißt direkt benachbart zu } b \in C \text{ (in Zeichen } b \longrightarrow a ) \overset{def}{\Leftrightarrow}$$

$$(1) \quad a \in B_{d_{\min}} (b)$$

$$(2) \quad | B_{d_{\min}} (b) | \ge n_{\min}$$

Definition (12) beschreibt $a \in C$ als direkt benachbart zu $b \in C$, wenn $a \in C$ innerhalb der Umgebung $B_{d_{\min}}$ von $b \in C$ liegt und diese Umgebung aus mindestens $n_{\min}$ Punkten besteht - einschließlich $a, b \in C$ (vgl. (8)).

Die mit Hilfe der Definition (9) gebildeten Cluster können aufgrund der Transformation $T$ aus (4) einige Messpunkte vom Erdboden enthalten. Deshalb ist es notwendig eine cluster-lokale Bodensegmentierung durchzuführen.

Unter Berücksichtigung der stets gegebenen, vollständigen 3D-Information eines Messpunktes aus $\sum P_i$ sei hierzu:

$$p_i = (\xi_i, \eta_i, \zeta_i)^t \in C \tag{13}$$

ein Punkt des Clusters $C$ über $U$, welcher innerhalb der Umgebung $B_{d_{\min}}$ aus (7) liegt. Falls nun:

$$\Delta \zeta = \left| \zeta_i - \zeta_j \right| < \varepsilon \quad \forall p_i, p_j \in B_{d_{\min}}, i \neq j \tag{14}$$

mit einem geeigneten $\varepsilon > 0$, dann liegen die Punkte aus $B_{d_{\min}}$ praktisch in einer lokalen Ebene, deren Normalenvektor in der Richtung nur wenig von der Vertikalen abweicht. Liegen zusätzlich die Punkte aus $B_{d_{\min}}$ an der unteren Basis des Clusters $C$, so handelt es sich um Bodenpunkte, die lokal zu $C$ sind. Diese lokalen Bodenpunkte werden aus der weiteren Rechnung entfernt, da sie die Erkennung von Staub-Clustern verfälschen würden.

Aufgrund der physikalischen Abbildungseigenschaften von Laser-Sensoren ist es möglich, aus einem einzigen Sensor-Frame, ohne die Notwendigkeit weiterer Messdaten-Akkumulation, mit Hilfe der Clusterbildung auf Basis der lokalen Punktdichte über der Projektionsmenge $U$ alle Brownout-Staubmessdaten zu identifizieren. Nach der gleichen Logik bekommt man auch alle Punkte-Cluster, die zu realen Hindernissen in der Landezone gehören.

Vermittels der beschriebenen cluster-lokalen Bodensegmentierung besteht das Ergebnis der Einzel-Frame Berechnung aus zwei disjunkten Punktemengen:

1) Menge aller $m$ punktdichtebasierter Cluster des i-ten Sensor-Frames:

$$\Sigma C_i := \cup C_k \quad , k \in \{1, \ldots, m\}, i \in \{1, \ldots, n\}, \quad n, m \in \mathbf{N} \tag{15}$$

2) Rest an verbliebenen Sensor-Messdaten:

$$R_i := \Sigma P_i \setminus \Sigma C_i \tag{16}$$

Wegen der Konstruktion des Verfahrens besteht die Menge $R_i$ praktisch nur aus den Boden-Messwerten der Landefläche. Die Menge $\Sigma C_i$ hingegen umfasst sowohl alle Staub-Cluster als auch alle Cluster, die zu realen Hindernissen gehören.

In einem weiteren Verfahrensschritt wird jedes Cluster $C_k \subseteq \Sigma C_i$, $k \in \{1, \ldots, m\}$ in eine zur Landefläche orthogonale Ebene projiziert, welche zusätzlich um den Winkel $\psi$ der horizontalen Hauptblickrichtung des Sensors-FOV rotiert wird und ergo orthogonal zur Blickrichtung des Sensors aufgespannt ist. Hierbei werden wieder die vollen 3D-Informationen eines Punktes des Clusters $C_k$ benutzt:

$$S_\psi : \mathbf{R}^3 \to \mathbf{R}^2 \quad (\xi, \eta, \zeta)^t \mapsto S_\psi(\xi, \eta, \zeta) := (u, v)^t \quad , mit \, (\xi, \eta, \zeta)^t \in C_k \tag{17}$$

Damit kann die Menge der projizierten Cluster-Punkte definiert werden als:

$$S_\psi(C_k) := V \subset \mathbf{R}^2 \tag{18}$$

Mit Hilfe der Transformation (17) erhält man eine aufrechte Projektion jedes individuellen Clusters $C_k$. Auf der Projektionsmenge $V$ können lokale Sub-Komponenten des Clusters $C_k$ bestimmt werden, die ihrerseits als eigenständige Cluster behandelt oder rekursiv in weitere Sub-Sub-Komponenten unter Einbeziehung der vollen 3D-Informationen zerlegt werden können. Das Ergebnis ist ein erweiterter Satz von $\hat{m}_i \in \mathbf{N}$ disjunkten, eindeutig identifizierbaren Punkte-Clustern $\hat{C}_l$ des i-ten Sensor-Frames:

$$\Sigma \hat{C}_i := \cup \hat{C}_l \quad , l \in \{1,\dots,\hat{m}_i\}, i \in \{1,\dots,n\}, \quad \hat{m}_i, n \in \mathbf{N} \tag{19}$$

Die Größe von $\hat{m}_i$ hängt sowohl vom räumlichen Auflösungsvermögen des verwendeten Laser-Sensors und der Messentfernung ab als auch von einem parametrisierbaren "Level-of-Detail", den man bei der Cluster-Bildung erreichen möchte. Eine individuelle Feinabstimmung diesbezüglich erfolgt sinnvoll über eine Heuristik auf Basis realer Messdaten von Brownout-Landungen.

Im Anschluss an die Cluster-Bildung werden für jedes Cluster $\hat{C}_l \subseteq \Sigma\hat{C}_i, l \in \{1,\dots,\hat{m}_i\}$ eindeutige, charakteristische Merkmale berechnet. Hierbei sind u.a. folgende Cluster-Merkmale von besonderer Bedeutung:

a) *geometrischer Cluster-Schwerpunkt als Positionsmerkmal:*

Sei $n = |\hat{C}_l|$ die Anzahl der Punkte des Clusters $\hat{C}_l \subseteq \Sigma\hat{C}_i$, dann ist der zugehörige Cluster-Schwerpunkt definiert als der Vektor:

$$\mathbf{s} := \left( \tfrac{1}{n}\sum_i \xi_i, \tfrac{1}{n}\sum_i \eta_i, \tfrac{1}{n}\sum_i \zeta_i \right)^t \in \mathbf{R}^3 \quad , i \in \{1,\dots,n\} \tag{20}$$

b) *räumliche Ausrichtung der Hauptachse des Clusters als Lage- bzw. Orientierungsmerkmal:*

Bezeichnen $\lambda_1, \lambda_2, \lambda_3 \in \mathbf{R}$ die reellwertigen Eigenwerte des Trägheitstensors $T(\hat{C}_l)$ zum Cluster $\hat{C}_l \subseteq \Sigma\hat{C}_i$, dann ist die Richtung der Hauptachse $\mathbf{v} \in \mathbf{R}^3$ des Clusters als Eigenvektor zum betragsmäßig kleinsten Eigenwert $\lambda_{\min}$ über:

$$(T(\hat{C}_l) - \lambda_{\min} \mathbf{I}) \, \mathbf{v} = \mathbf{0} \tag{21}$$

mit der Einheitsmatrix $\mathbf{I}$ eindeutig bestimmbar.

c) *Cluster-Exzentrizität als Formmerkmal:*

Die Exzentrizität $\varepsilon$ eines Clusters $\hat{C}_l$ ist über die zentrierten Momente 2. Ordnung $\mu_{2,0}, \mu_{1,1}, \mu_{0,2}$ leicht zu berechnen:

$$\varepsilon(\hat{C}_l) = \frac{(\mu_{2,0}(\hat{C}_l) - \mu_{0,2}(\hat{C}_l))^2 + 4\mu_{1,1}^2(\hat{C}_l)}{(\mu_{2,0}(\hat{C}_l) + \mu_{0,2}(\hat{C}_l))^2} \tag{22}$$

Hierbei wird vorteilhaft die Berechnung der Exzentrizität sowohl über $T(\hat{C}_l)$ (vgl. (4)) als auch über $S_\psi(\hat{C}_l)$ (vgl. (17)) durchgeführt. Dadurch gewinnt man zwei getrennte Formmerkmale $\varepsilon_{\xi\eta}$ und $\varepsilon_{uv}$ zur eindeutigen Charakterisierung für ein und dasselbe Cluster $\hat{C}_l \subseteq \Sigma\hat{C}_i$.

Bis zu diesem Punkt erfolgte die erfindungsgemäße Berechnung auf einem einzigen Sensor-Frame. Über die disjunkte Restmenge $R_i$ (vgl. (16)) wurden alle Bodenpunkte von den erhabenen Clustern getrennt. Die 3D-Cluster wiederum wurden durch Zurückführung auf Operationen im $\mathbf{R}^2$ bestimmt und in Abhängigkeit von Sensorauflösung und Messentfernung gemäß einem parametrisierbaren "Level-of-Detail" hinreichend verfeinert. Anschließend wurden für jedes Cluster eindeutige, charakteristische Merkmale für Position, räumliche Orientierung und Form abgeleitet.

Im weiteren werden nun Informationen aus einer Abfolge von mehreren Sensor-Frames herangezogen. Aufgrund der Berechnungsergebnisse aus der Einzel-Frame Verarbeitung ist es hier jedoch - im Gegensatz zum Stand der Technik - vorteilhaft möglich, nur noch mit den frame-basierten, charakteristischen Cluster-Merkmalen weiterzurechnen.

Die Menge $\Sigma\hat{C}_i \subseteq \Sigma P_i \subset \mathbf{R}^3$ enthält sowohl alle Staub-Messwerte als auch all jene Messwerte, die zu realen Hindernissen gehören. Im Folgenden wird gezeigt, wie man einfach und elegant die Staub-Messwerte von den Hindernis-Messwerten unterscheiden kann:

Eine wesentliche Eigenschaft von Brownout-Wolken bzw. Teilmengen davon ist es,

dass sie sich aufgrund der Eigenbewegung des Hubschraubers und des Luftstroms seines Hauptrotors über die Zeit $t$ in ihrer Position über Grund kontinuierlich verändern. Eine Brownout-Wolke ist per se ein flüchtiges, nicht ortsfestes Objekt.

Aus diesem Grunde wird sich auch der geometrische Schwerpunkt der Wolke, im Gegensatz zu realen Hindernissen, über die Zeit $t$ nicht ortsfest verhalten, wie in Fig.6 in der Draufsicht ($\eta$-Ebene) veranschaulicht.

Die vom Laser-Sensor detektierte Vorderseite 201 der Brownout-Wolke ändert sich kontinuierlich über die Zeit $t$. Man erkennt, die Änderung der Position des Schwerpunktes 202 derselben Brownout-Wolke zu den Zeiten $t_0$, $t_1$, $t_2$, dagegen bleibt das reale Hindernis 105 und dessen zugehöriger Schwerpunkt 203 ortsunveränderlich. Die zeitliche Änderung der Position des Schwerpunktes der Brownout-Wolke oder Teilmengen derselben korreliert mit einer analogen zeitlichen Änderung der zugehörigen Orientierung der Hauptachse und der Exzentrizität.

Für reale Hindernisse bestehen auf natürliche Art folgende Zusammenhänge, wobei $l$ das Cluster und $i$ den Frame bezeichnet: Sei

$$\mathbf{s}^{(l,i)} : \mathbf{R}^+ \to \mathbf{R}^3 \quad t \mapsto \mathbf{s}^{(l,i)}(t) := (\xi_s^{(l,i)}(t), \eta_s^{(l,i)}(t), \zeta_s^{(l,i)}(t))^t \qquad (23)$$

die Ortsvektorfunktion des Schwerpunktes s zu einem Cluster $\hat{C}_l \subseteq \sum \hat{C}_i$, $l \in \{1,..., \hat{m}_i\}$, $i \in \{1,...,n\}$ in Abhängigkeit von $t$, dann gilt für ein reales Hindernis-Cluster:

$$\mathbf{s}^{(l,i)}(t) \cong const. \quad \forall t \in \mathbf{R}^+ \qquad (24)$$

Sei

$$\mathbf{v}^{(l,i)} : \mathbf{R}^+ \to \mathbf{R}^3 \quad t \mapsto \mathbf{v}^{(l,i)}(t) := (\xi_v^{(l,i)}(t), \eta_v^{(l,i)}(t), \zeta_v^{(l,i)}(t))^t \qquad (25)$$

die Richtungsvektorfunktion der Hauptachse $\mathbf{v}$ zu einem Cluster $\hat{C}_l \subseteq \sum \hat{C}_i$, $l \in \{1,...,\hat{m}_i\}$, $i \in \{1,...,n\}$ in Abhängigkeit von $t$, dann gilt für ein reales Hindernis-Cluster:

$$\mathbf{v}^{(l,i)}(t) \cong const. \quad \forall t \in \mathbf{R}^+ \qquad (26)$$

Seien

$$\varepsilon_{\xi\eta}^{(l,i)} : \mathbf{R}^+ \to [0,1] \quad t \mapsto \varepsilon_{\xi\eta}^{(l,i)}(t) := a^{(l,i)}$$
$$\varepsilon_{uv}^{(l,i)} : \mathbf{R}^+ \to [0,1] \quad t \mapsto \varepsilon_{uv}^{(l,i)}(t) := b^{(l,i)} \qquad (27)$$

die Cluster-Exzentrizität bezüglich der Transformationen $T$ und $S_\psi$ (vgl. (4), (17)) zu einem Cluster $\hat{C}_l \subseteq \sum \hat{C}_i$, $l \in \{1,...,m_i\}$, $i \in \{1,...,n\}$ in Abhängigkeit von $t$, dann gilt für ein reales Hindernis-Cluster:

$$\varepsilon_{\xi\eta}^{(l,i)}(t) \cong const. \quad \forall t \in \mathbf{R}^+$$
$$\varepsilon_{uv}^{(l,i)}(t) \cong const. \quad \forall t \in \mathbf{R}^+ \qquad (28)$$

Mit Hilfe der Gleichungen (23), (25) und (27) lassen sich die zeitlichen Änderungen für Schwerpunkt, Hauptachse und Exzentrizität eines Clusters vorteilhaft beschreiben.

Zur weiteren Auswertung wird vorteilhaft für jede dieser Kenngrößen zu einem Cluster $\hat{C}_l \subseteq \sum \hat{C}_i$ ein Wahrscheinlichkeitsmaß $P_{l,i}$ in Abhängigkeit der Streuung in Bezug auf deren mittlere quadratische Abweichung vom jeweiligen Mittelwert über $n \in \mathbf{N}$ Sensor-Frames eingeführt - wobei Entartungen, bei denen die empirische Streuung einer Kenngröße größer ist als der zugehörige Mittelwert, aus der weiteren Betrachtung ausgeschlossen werden:

Sei hierzu D ein geeigneter Definitionsbereich und

$$P_{l,i} : D \to [0,1] \quad A^{(l,i)} \mapsto P_{l,i}(A^{(l,i)}) := \left( 1 - \frac{\left| \sqrt{n \sum_i (A^{(l,i)})^2 - \left( \sum_i A^{(l,i)} \right)^2} \right|}{\left| \sum_i A^{(l,i)} \right|} \right)^2 \tag{29}$$

für $i \in \{1,...,n\}$ und $l \in \{1,...,\hat{m}_i\}$, mit der Substitution des zufälligen Ereignisses $A^{(l,i)}$:

$$A^{(l,i)} = \mathbf{s}^{(l,i)} \vee A^{(l,i)} = \mathbf{v}^{(l,i)} \vee A^{(l,i)} = \varepsilon_{\xi\eta}^{(l,i)} \vee A^{(l,i)} = \varepsilon_{uv}^{(l,i)} \tag{30}$$

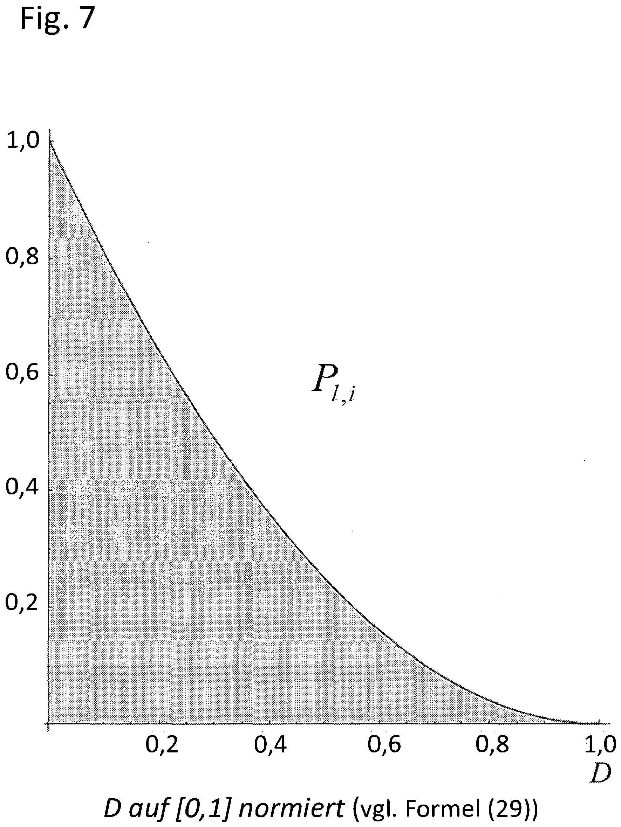

Fig. 7 veranschaulicht das Wahrscheinlichkeitsmaß $P_{l,i}$ über D:

Das Wahrscheinlichkeitsmaß $P_{l,i}$ ist so konstruiert, dass mit zunehmender Streuung einer Kenngröße um ihren jeweiligen Mittelwert die Wahrscheinlichkeit für einen statischen Zustand quadratisch abnimmt.

Über die Substitution (30) werden vier Einzelwahrscheinlichkeiten zu den Kenngrößen (23), (25) und (27) für jedes Cluster $\hat{C}_l \subseteq \Sigma\hat{C}_i$, $l \in \{1,...,\hat{m}_i\}$, $i \in \{1,...,n\}$ über n-Sensor-Frames definiert. Für die Charakterisierung eines Clusters werden diese Einzelwahrscheinlichkeiten zu einer gewichteten Gesamtwahrscheinlichkeit zusammengefasst.

Seien hierzu $\kappa_1,...,\kappa_4 \in \mathbf{R}$ geeignete Gewichte, dann ist die Gesamtwahrscheinlichkeit $\hat{P}_{l,i}$ dafür, dass es sich bei einem Cluster $\hat{C}_l \subseteq \Sigma\hat{C}_i$ um ein statisches, reales Hindernis handelt, definiert durch:

$$\hat{P}_{l,i}(\hat{C}_l \subseteq \Sigma\hat{C}_i) := \kappa_1 P_{l,i}(\mathbf{s}^{(l,i)}) + \kappa_2 P_{l,i}(\mathbf{v}^{(l,i)}) + \kappa_3 P_{l,i}(\varepsilon_{\xi\eta}^{(l,i)}) + \kappa_4 P_{l,i}(\varepsilon_{uv}^{(l,i)}) \in [0,1] \tag{31}$$

Mit Hilfe der Gesamtwahrscheinlichkeit $\hat{P}_{l,i}$ kann man nun leicht validieren, ob ein Cluster innerhalb sinnvoller Zuverlässigkeitsgrenzen ein statisches, reales Hindernis repräsentiert. Wegen der Konstruktion von $\hat{P}_{l,i}$ und der damit zusammenhängenden charakteristischen Kenngrößenanalyse über n-Sensor-Frames, ist es sogar vorteilhaft möglich, ein entsprechendes Ergebnis für den jeweils letzten, aktuellen Sensor-Frame zu berechnen, ohne das hierzu die Gesamtmenge aller Messpunkte aus n-Sensor-Frames nochmals benötigt wird. Dies stellt ein sehr recheneffizientes Verhalten des erfindungsgemäßen Verfahrens im Vergleich zu bekannten Berechnungsverfahren dar.

Aufgrund des frei parametrisierbaren "Level-of-Detail" bei der Cluster-Bildung lässt sich stets erreichen, dass Bestandteile der Brownout-Wolke und reale Hindernisse paarweise disjunkte Teilmengen von $\Sigma P_i$ bilden. Deshalb sind die Staub-Cluster am Ende der vorgestellten Rechnung leicht durch die Negation:

$$\neg \hat{P}_{l,i}(\hat{C}_l \subseteq \Sigma\hat{C}_i), l \in \{1,...,\hat{m}_i\}, i \in \{1,...,n\} \tag{32}$$

identifizierbar.

Darüber hinaus können zur Verfeinerung der beschriebenen Cluster-Validierung vorteilhaft weitere spezifische Kenngrößen, wie z.B.: Anzahl der Messwerte pro Cluster, relative Benachbartheit, Cluster von Clustern oder Untergliederung in formabhängige Sub-Komponenten (sog. Formprimitive) in die Berechnung einbezogen werden.

Der besondere Ansatz des vorgestellten Verfahrens bei der Verarbeitung der 3D-Daten zur Segmentierung einer Brownout-Wolke über die Wahrscheinlichkeit $\hat{P}_{l,i}$ liegt in der Charakterisierung der zeitlichen Veränderung von dichteabhängigen Messpunkte-Clustern über n-Sensor-Frames mittels abstrakter, diskreter Kenngrößen für Position, räumliche Orientierung und Form - und damit nicht über eine rechenintensive Akkumulation einer sehr großen Anzahl isolierter Einzelmesspunkte über mehrere Sensor-Frames und deren globaler mathematischer Auswertung, wie nach dem derzeitigen Stand der Technik üblich.

An Hand einer Reihe von Graphiken wird die Funktionsweise der erfindungsgemäßen Datenverarbeitung, insbesondere die Bildung von Clustern aus Brownout-Staubwolken auf Basis realer Messdaten von Brownout-Versuchen, beispielhaft demonstriert.

Hierbei wird beispielhaft deutlich gemacht, wie aus einem einzigen Sensor-Frame unter Ausnutzung der natürlichen Messpunktedichte und der lokalen Messpunktverteilung innerhalb der Brownout-Wolke aufgrund der physikalischen Abbildungseigenschaften von Laser-Sensoren Messpunkt-Cluster gebildet werden. Durch die Berechnung von charakteristischen Eigenschaften für Ort, räumlicher Orientierung und Form der Messpunkt-Cluster sowie der Analyse und Validierung der zeitlichen Änderungen dieser Kenngrößen über mehrere Sensor-Frames ist es möglich, die Brownout-Wolke zuverlässig aus der Menge der Messdaten zu segmentieren und damit schlussendlich herauszufiltern. Die nachfolgenden Graphiken demonstrieren, wie dadurch die Orientierung des Piloten und sein Situationsbewusstseins erhöht sowie die Lageerkennung von realen Hindernissen in Brownout-Situationen signifikant verbessert werden kann.

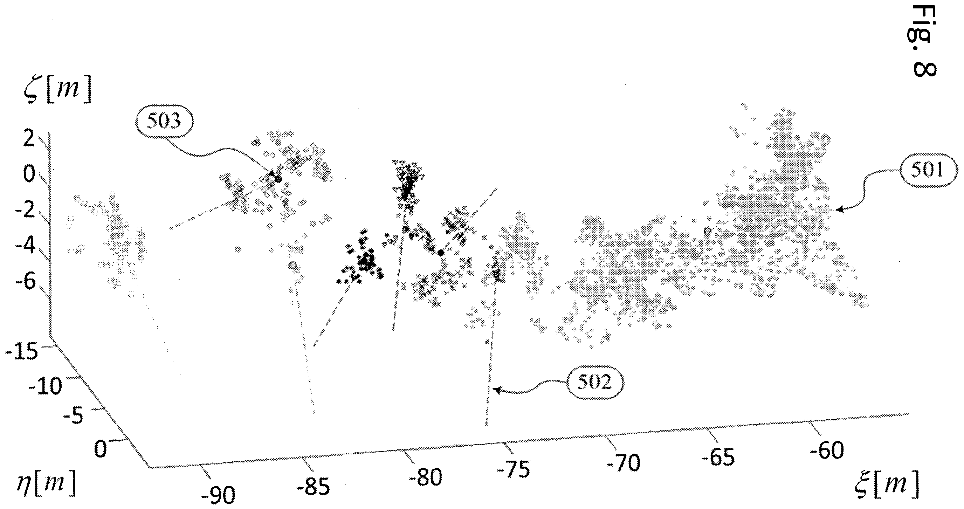

Ein beispielhaftes Berechnungsergebnis der erfindungsgemäßen Clusterung einer Brownout-Wolke ist in Fig. 8 dargestellt. Man erkennt eine perspektivische, 3-dimensionale Anordnung mehrerer Staub-Cluster 501 (das Beispiel zeigt 8 Cluster, die sich aus realen Messpunkten eines Laser-Sensors zusammensetzen) mit ihren unterschiedlichen Orientierungen der Hauptachsen 502 und den jeweiligen Schwerpunkten 503.

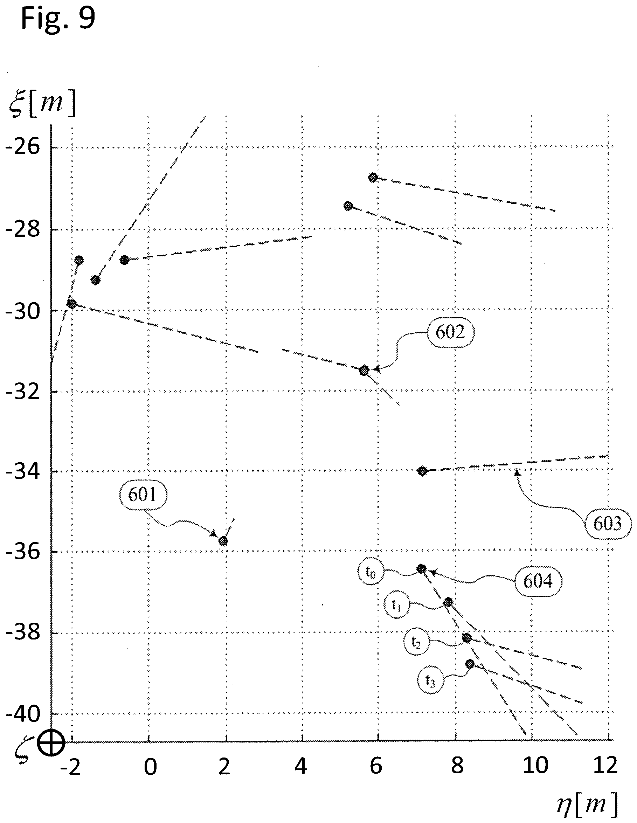

Weil diese Staub-Cluster auf natürliche Art und Weise zeitlich veränderlich sind, verändern sich gleichermaßen die entsprechenden charakteristischen Merkmale über der Zeit. Fig.9 zeigt beispielhaft eine Momentaufnahme des typischen zeitlichen Verhaltens der Schwerpunkte 601 und der Hauptachsen-Orientierung 603 von flüchtigen Staub-Clustern im 3-dimensionalen Raum (hier in der orthographischen Projektion in die $\xi_\eta$-Ebene) basierend auf realen Berechnungsergebnissen aus mehreren Sensor-Frames.

Hierin kennzeichnet 602 ein Cluster, dessen Schwerpunkt zwar über die Zeit von zwei Sensor-Frames praktisch ortsfest bleibt, dessen Hauptachsen-Orientierungen sich jedoch deutlich voneinander unterscheiden. 604 zeigt die Veränderung der Schwerpunktslage und Hauptachsen-Orientierung eines weiteren Staub-Clusters zu den diskreten Zeiten $t_0,\ldots, t_3$.

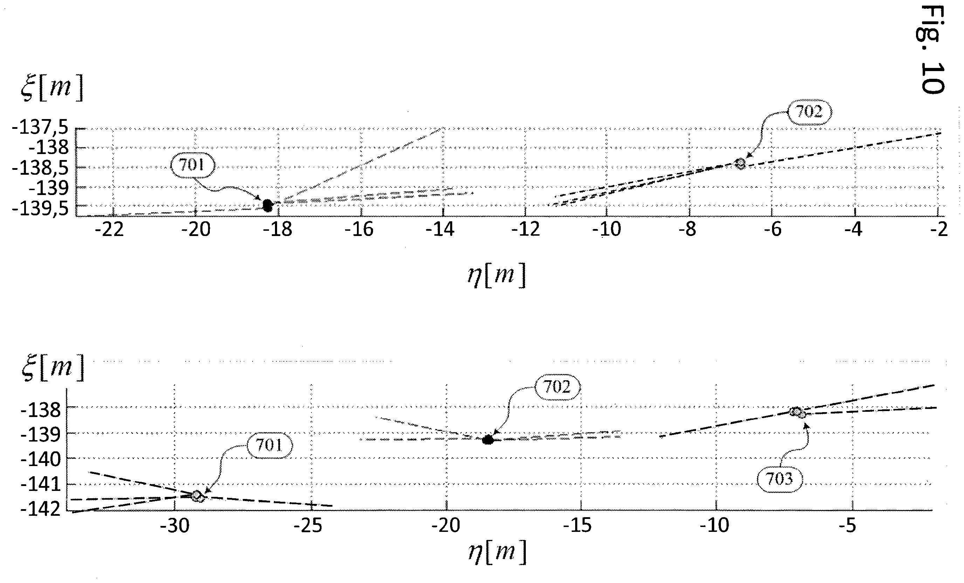

Die wichtigen und für den Anwender relevanten Daten bilden reale, ortsfeste Hindernisse. In Fig. 10 sieht man zwei Berechnungsbeispiele für das zeitliche Verhalten von realen, statischen Hindernissen. Die Schwerpunkte 701, 702 und 703 bleiben über die Zeit praktisch ortsfest. Die Hauptachsen (gestrichelte Linien) dieser Hindernis-Cluster zeigen alle innerhalb enger numerischer Grenzen entweder in praktisch die gleiche Richtung oder in die dazu entgegengesetzte Richtung, was wiederum gleichbedeutend ist hinsichtlich der grundsätzlichen Ausrichtung des Hindernisses. Vereinzelte Ausreißer in der Hauptachsen-Orientierung bei der Betrachtung einer Mehrzahl an Sensor-Frames fallen nicht ins Gewicht und können vernachlässigt werden.

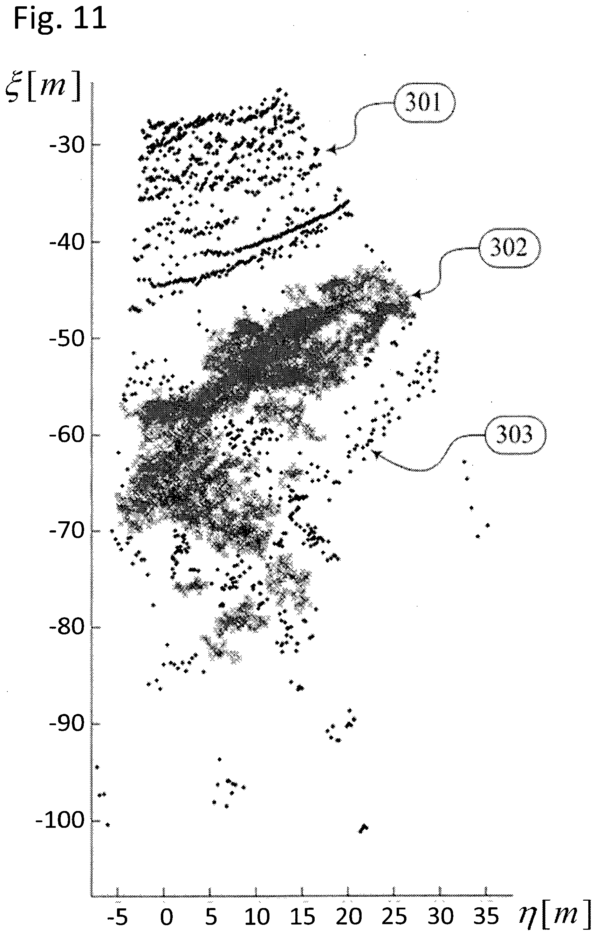

Betrachten wir beispielhaft nun in Fig. 11 die Projektionsmenge $T(\sum P_i)$ aus (5) mit der segmentierten Staubwolke aus einer realen Brownout-Landung über der $\xi\eta$-Ebene. Man erkennt nach Abschluss der erfindungsgemäßen Staub-Segmentierung Boden-Messpunkte 301 vor der Staubwolke, die Messpunkte der segmentierten Brownout-Wolke 302 selbst und wiederum Boden-Messpunkte 303, hier hinter der Wolke.

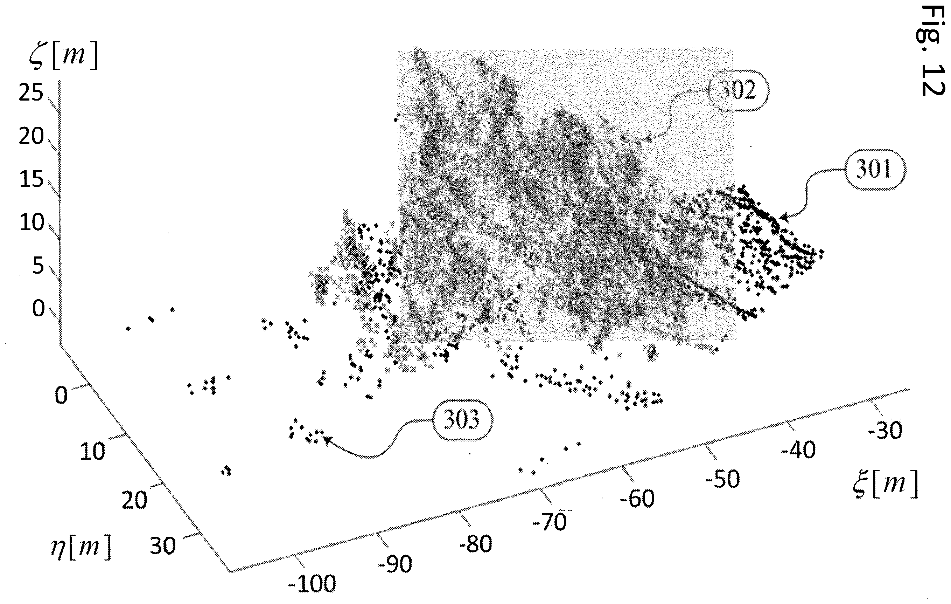

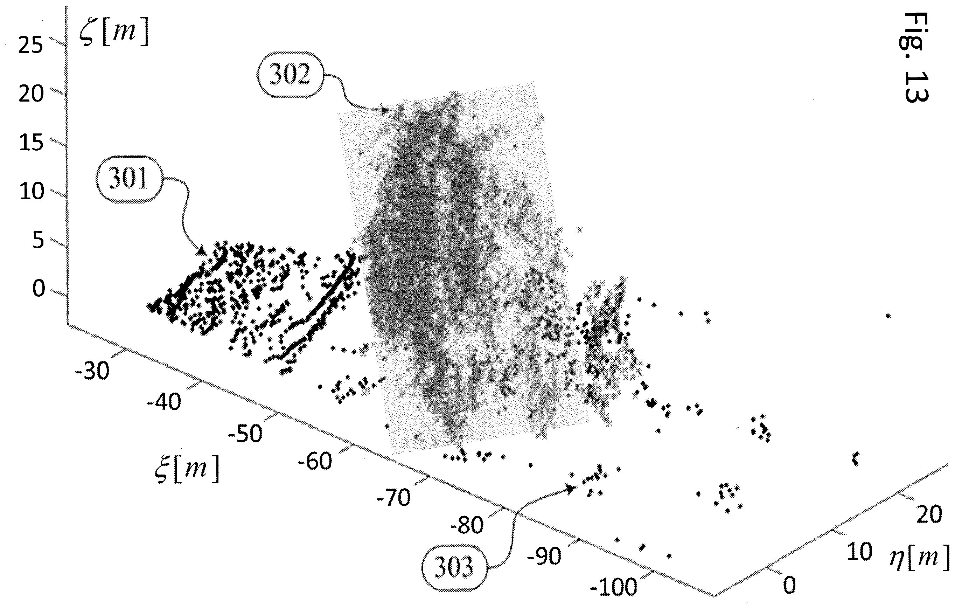

Die Punktemenge derselben Szene aus Fig. 11 wird in Fig. 12 in einer perspektivischen 3D-Ansicht gezeigt. Man erkennt hierbei wieder die Boden-Messpunkte 301 vor der Staubwolke, die Messpunkte der segmentierten Brownout-Wolke 302 und die Boden-Messpunkte 303 hinter der Wolke. Fig. 13 zeigt eine analoge Darstellung derselben Szene aus einem anderen Blickwinkel, wobei jeweils die Darstellung aus einer Position stattfindet, die nicht der ursprünglichen Laser-Sensor-Position entspricht.

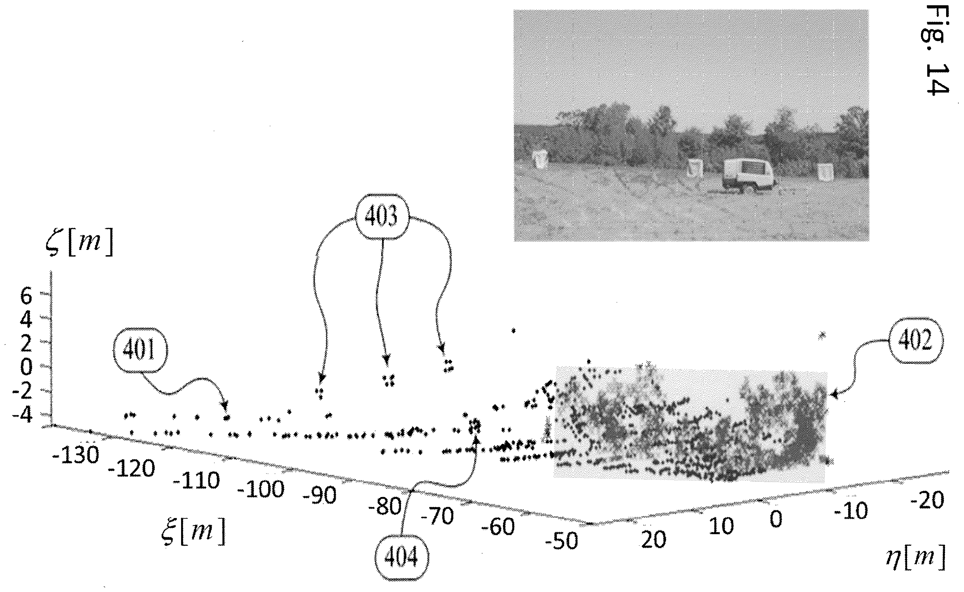

Um zu verdeutlichen, dass die segmentierten Messdaten mit der Realität korrelieren, ist in Fig. 14 beispielhaft eine reale Umgebung mit Hindernissen in der Landezone dargestellt. Dabei sieht man ein photographisches Abbild der Landezone vor dem Einsetzen des Brownouts (kleines Foto im oberen Bildrand), sowie die zugehörige erfindungsgemäß segmentierte Staubwolke (als Ergebnis der beschriebenen Datenverarbeitung) im Brownout während des Hubschrauberlandevorgangs in perspektivischer 3D-Ansicht.

Hier sind die Boden-Messpunkte 401, die segmentierte Staubwolke 402 sowie eine Anordnung von drei Hindernissen 403 im Hintergrund und ein isoliertes Hindernis 404 in geringerer Entfernung zu erkennen. An Hand von Fig. 14 zeigt sich deutlich der Vorteil der vorliegenden Erfindung; es wird eine klare und deutliche Unterscheidung der Messwertezugehörigkeit zwischen Staubwolke, Boden bzw. Hindernissen erreicht.

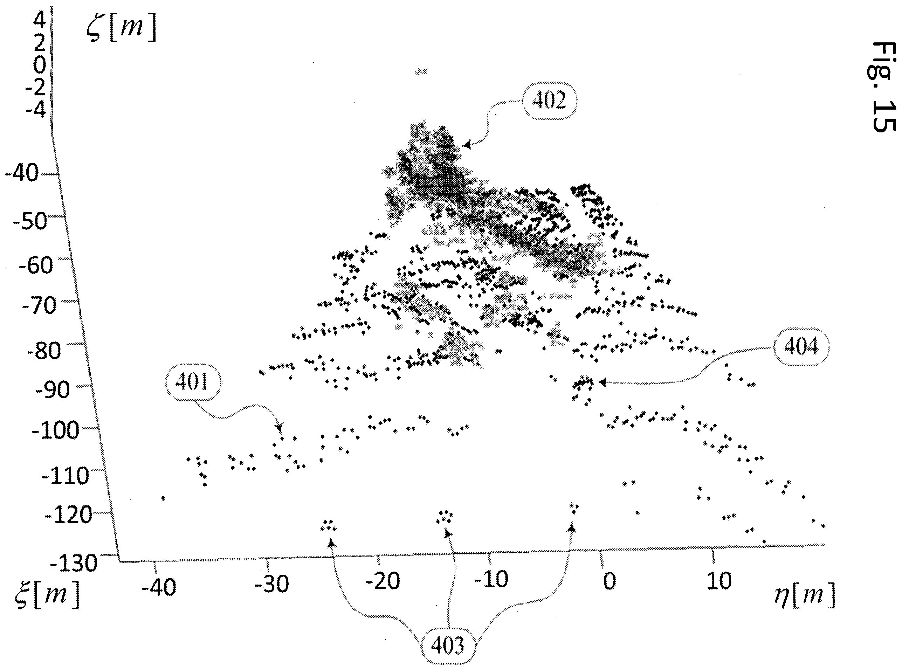

Fig. 15 zeigt die rückwärtige 3D-Ansicht der Szene aus Fig. 14 mit Hindernissen 403 und 404 hinter der Brownout-Wolke 402 über den Boden-Messpunkten 401.

Hieraus ist ersichtlich, dass das erfindungsgemäße Verfahren eine zuverlässige und sehr effiziente Segmentierung der Staubwolke erlaubt, und damit praktisch ein Hindurchschauen durch den aufgewirbelten Staub ermöglicht, was einen räumlichen Orientierungsverlust des Piloten im Brownout-Fall verhindert.

Selbst die Erkennung von relativ kleinen Hindernissen in der Landezone eines Hubschraubers durch die Brownout-Wolke hindurch ist, wie Fig. 14 und Fig. 15 beispielhaft an Hand realer 3D-Messdaten zeigen, mit dem erfindungsgemäßen Segmentierungsverfahren möglich.

Weiterhin ist es mit dem erfindungsgemäßen Verfahren möglich, ein echtzeitfähiges operationell einsatztaugliches Avionik-Systems zur Pilotenunterstützung von Hubschrauberlandungen speziell unter Brownout-Bedingungen zu entwickeln. Wobei sich der Einsatz nicht notwendig auf Luftahrzeuge beschränkt, da auch in anderen mobilen Fahrzeugen oder auch an stationären Positionen ein Einsatz der beschriebenen Staubsegmentierung sinnvoll sein könnte. Das erfindungsgemäße Verfahren kann insbesondere in einem System, das einen Laser-Sensor, eine Datenverarbeitungseinheit sowie eine Ausgabeeinrichtung umfasst, vorteilhaft implementiert werden.

Die Datenverarbeitungseinheit segmentiert und filtert die physikalisch gemessenen 3D-Daten mit Hilfe des erfindungsgemäßen Berechnungsverfahrens derart, dass auf der Ausgabeeinrichtung (z.B. in einer synthetischen Sicht der Umgebung beispielsweise auf einem Helmvisier, HUD oder Monitor) nur noch die relevanten Informationen, d.h. Boden- und reale Hindernisdaten, angezeigt werden; ergo die zugehörigen Brownout-Staubdaten ausgeblendet werden. In den Figuren 11 bis 15 z.B. bedeutet dies, dass die segmentierten Staubwolken 302, 402 aus den Anzeigedaten der Ausgabeeinrichtung entfernt werden, was insbesondere für die räumliche Orientierung und das Situationsbewusstsein des Piloten sowie für die Beurteilung der Hindernissituation von großer Bedeutung ist, da sich ohne das beschriebene Verfahren die Brownout-Wolke im direkten Sichtfeld des Piloten befindet.

**Patentansprüche**

1. Verfahren zur Segmentierung der Daten eines 3D-Sensors, erzeugt in Gegenwart von Aerosol-Wolken, zur Erhöhung des Situationsbewusstseins und der Lageerkennung von Hindernissen, wobei

   - in einem ersten Schritt die Sensordaten in eine 3D-Messpunktwolke transformiert werden,
   - in einem zweiten Schritt aus der 3D-Messpunktwolke eines einzelnen Messzyklus des 3D-Sensors zusammenhängende Untermengen, sogenannte Messpunkt-Cluster, basierend auf der lokalen Messpunktdichte ermittelt werden,
   - in einem dritten Schritt mindestens eine der folgenden charakteristischen Kenngrößen der einzelnen Messpunkt-Cluster bestimmt werden:

      - Position,
      - Orientierung im Raum,
      - Form,

   - in einem vierten Schritt die zeitliche Veränderung dieser charakteristischen Kenngrößen anhand der in nachfolgenden Messzyklen aufgenommenen Sensordaten ermittelt wird, aus der sich die Zugehörigkeit eines Messpunkt-Clusters zu einem realen Hindernis oder zu der Aerosol-Wolke ergibt.

2. Verfahren nach Anspruch 1, **dadurch gekennzeichnet, dass** die Bestimmung der Messpunkt-Cluster auf der Basis einer Projektion der 3D-Messpunktwolke in eine horizontale Ebene erfolgt.

3. Verfahren nach Anspruch 2, **dadurch gekennzeichnet, dass** eine weitere Stufe der Clusterung auf der Basis einer Projektion der bereits ermittelten Messpunkt-Cluster in eine vertikale Ebene erfolgt, welche orthogonal zur horizontalen Hauptblickrichtung des 3D-Sensors ausgerichtet ist.

4. Verfahren nach einem der vorangehenden Ansprüche, **dadurch gekennzeichnet, dass** aus den ermittelten Messpunkt-Clustern die die lokale Bodenfläche repräsentierenden 3D-Messpunkte eliminiert werden.

5. Verfahren nach einem der vorangehenden Ansprüche, **dadurch gekennzeichnet, dass** für jede der Kenngrößen eines ermittelten Messpunkt-Clusters ein individuelles Wahrscheinlichkeitsmaß in Abhängigkeit der jeweiligen Streuung über mehrere Messzyklen hinweg ermittelt wird und aus den individuellen Wahrscheinlichkeitsmaßen der einzelnen Kenngrößen eines Messpunkt-Clusters eine Gesamtwahrscheinlichkeit ermittelt wird, mit der das Messpunkt-Cluster eindeutig als reales Hindernis oder Aerosol-Wolke charakterisiert werden kann.

6. Verfahren nach einem der vorangehenden Ansprüche, **dadurch gekennzeichnet, dass** die 3D-Daten unter Brownout oder Whiteout Bedingungen bei Start oder Landung eines Fluggeräts erzeugt wurden.

7. Verfahren nach einem der vorangehenden Ansprüche, **dadurch gekennzeichnet, dass** die 3D-Messpunktwolke mittels eines Multi-Puls Laser Sensors, der mehrere Messpunkte pro emittiertem Laser-Strahl zurückliefert, erzeugt wurde.

8. Verfahren nach einem der vorangehenden Ansprüche, **dadurch gekennzeichnet, dass** es in Echtzeit auf der Basis der fortlaufend beim Start oder Landung gewonnenen Sensormessdaten erfolgt.

## Claims

1. Method for segmenting the data from a 3-D sensor, generated in the presence of aerosol clouds, in order to increase the situational awareness and the detection of the position of obstacles, wherein

   - in a first step, the sensor data are transformed into a 3-D measurement point cloud,
   - in a second step, contiguous subsets, so-called measurement point clusters, are determined from the 3-D measurement point cloud of an individual measuring cycle of the 3-D sensor on the basis of the local measurement point density,
   - in a third step, at least one of the following characteristic variables of the individual measurement point clusters are determined:

     - position,
     - orientation in space,
     - shape,

   - in a fourth step, the temporal change in these characteristic variables is determined on the basis of the sensor data recorded in subsequent measuring cycles, which change reveals the affiliation of a measurement point cluster to a real obstacle or to the aerosol cloud.

2. Method according to Claim 1, **characterized in that** the measurement point clusters are determined on the basis of a projection of the 3-D measurement point cloud into a horizontal plane.

3. Method according to Claim 2, **characterized in that** a further stage of the clustering is carried out on the basis of a projection of the already determined measurement point clusters into a vertical plane which is oriented orthogonal to the horizontal main viewing direction of the 3-D sensor.

4. Method according to one of the preceding claims, **characterized in that** the 3-D measurement points representing the local ground area are eliminated from the determined measurement point clusters.

5. Method according to one of the preceding claims, **characterized in that** an individual degree of probability is determined for each of the characteristic variables of a determined measurement point cluster on the basis of the respective scattering over a plurality of measuring cycles and an overall probability is determined from the individual degrees of probability of the individual characteristic variables of a measurement point cluster and can be used to unambiguously characterize the measurement point cluster as a real obstacle or an aerosol cloud.

6. Method according to one of the preceding claims, **characterized in that** the 3-D data were generated under brownout or whiteout conditions when starting or landing an aircraft.

7. Method according to one of the preceding claims, **characterized in that** the 3-D measurement point cloud was generated by means of a multi-pulse laser sensor which returns a plurality of measurement points for each emitted laser beam.

8. Method according to one of the preceding claims, **characterized in that** it is carried out in real time on the basis of the sensor measurement data continuously obtained during starting or landing.


## Revendications

1. Procédé de segmentation de données d'un capteur 3D, générées en présence de nuages d'aérosol, pour augmenter la connaissance de la situation et la reconnaissance de la position d'obstacles, dans lequel,

   - lors d'une première étape, les données de capteurs sont transformées en un nuage de points de mesure 3D,
   - lors d'une deuxième étape, des combinaisons associées de points de mesure, dites grappes de points de mesure, sont déterminées à partir du nuage 3D d'un cycle de mesure individuel du capteur 3D, sur la base de la densité de points de mesure locale,
   - lors d'une troisième étape, au moins l'un des paramètres caractéristiques suivants des grappes de points de mesure individuelles sont déterminés :

- la position,
- l'orientation dans l'espace,
- la forme,

- lors d'une quatrième étape, la modification temporelle desdits paramètres caractéristiques est déterminée sur la base des données de capteurs acquises au cours de cycles de mesure suivants, dont il est déduit l'appartenance d'une grappe de points de mesure à un obstacle réel ou au nuage d'aérosol.

2. Procédé selon la revendication 1, **caractérisé en ce que** la détermination de la grappe de points de mesure s'effectue sur la base d'une projection du nuage de points de mesure 3D dans un plan horizontal.

3. Procédé selon la revendication 2, **caractérisé en ce qu'**un autre stade du regroupement s'effectue sur la base d'une projection des grappes de points de mesure déjà déterminées, dans un plan vertical qui est orienté de manière orthogonale à la direction de visée horizontale principale du capteur 3D.

4. Procédé selon l'une quelconque des revendications précédentes, **caractérisé en ce que** les points de mesure 3D représentent la surface locale du sol sont éliminés des grappes de points de mesure déterminées.

5. Procédé selon l'une quelconque des revendications précédentes, **caractérisé en ce que**, pour chacun des paramètres d'une grappe de points de mesure déterminée, une mesure de probabilité individuelle est déterminée en fonction de la diffusion respective au cours de plusieurs cycles de mesure et **en ce que**, à partir des mesures de probabilité individuelles des paramètres individuels d'une grappe de points de mesure, on détermine une probabilité globale avec laquelle la grappe de points de mesure peut être **caractérisée** de manière univoque en tant qu'un obstacle ou que nuage d'aérosol réel.

6. Procédé selon l'une quelconque des revendications précédentes, **caractérisé en ce que** les données 3D ont été générées dans des conditions de Brownout ou de Whiteout lors du démarrage ou de l'atterrissage d'un aéronef.

7. Procédé selon l'une quelconque des revendications précédentes, **caractérisé en ce que** le nuage de points de mesure 3D a été généré au moyen d'un capteur laser multi-impulsions qui renvoie plusieurs points de mesure par faisceau laser émis.

8. Procédé selon l'une quelconque des revendications précédentes, **caractérisé en ce qu'**il est mis en oeuvre en temps réel sur la base des données de mesure de capteurs obtenues en continu lors du démarrage ou de l'atterrissage.

Fig. 1

Fig. 2

Fig. 3

Fig. 4

# Fig. 5

# Fig. 6

## Fig. 7

$D$ auf [0,1] normiert (vgl. Formel (29))

Fig. 8

Fig. 9

Fig. 10

Fig. 11

Fig. 12

Fig. 13

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009035191 A1
- US 20110313722 A1
- EP 2418510 A1